# FASCICULE DE BREVET EUROPEEN

(11) **EP 3 507 195 B1**
(45) Date de publication et mention de la délivrance du brevet: **01.07.2020**
(21) Numéro de dépôt: 17768830.6
(22) Date de dépôt: 23.08.2017
(51) Int. Cl.: B64G 5/00, F02K 9/38, F02K 9/96, F02K 9/97

(54) **MOTEUR-FUSEE COMPRENANT UN DISPOSITIF D'ARRIMAGE**
RAKETENMOTOR MIT EINER SICHERUNGSVORRICHTUNG
ROCKET ENGINE COMPRISING A SECURING DEVICE

(30) Priorité: 01.09.2016 FR 1601289
(43) Date de publication de la demande: 10.07.2019
(73) Titulaire: ArianeGroup SAS, 75015 Paris (FR)
(72) Inventeur: PYRE, Alain, 27950 Saint-Just (FR); ROZ, Gérard, 27510 Pressagny L'Orgueilleux (FR)
(74) Mandataire: Cabinet Beau de Loménie
(86) Numéro de dépôt international: PCT/FR2017/052263
(87) Numéro de publication internationale: WO 2018/042106

(56) Documents cités:
- FR-A1- 2 956 739
- FR-A1- 3 022 629
- RU-C2- 2 225 527

## Description

### DOMAINE DE L'INVENTION

Le présent exposé concerne un moteur-fusée bénéficiant d'une meilleure tenue durant sa phase de démarrage.

Un tel moteur-fusée peut notamment équiper le premier étage ou l'étage unique d'un lanceur commercial, d'un missile ou de tout autre type de fusée ou véhicule à usage civil ou militaire.

### ETAT DE LA TECHNIQUE ANTERIEURE

Les moteurs principaux des premiers étages de lanceurs sont mis à feu lorsque le lanceur est encore au sol et sont donc soumis à la pression atmosphérique ambiante. Or, lors du régime transitoire de démarrage, la partie inférieure du divergent d'un tel moteur, relativement long, est en sous-pression par rapport à cette pression atmosphérique ambiante : dès lors, le divergent subit des contraintes dirigées vers l'intérieur qui se compensent toutefois en temps normal en raison du caractère axisymétrique du divergent.

Néanmoins, il arrive fréquemment, de manière difficilement prévisible et non stationnaire, que des décollements de jets se produisent dans certaines zones du divergent de telle sorte que la pression atmosphérique pénètre localement dans de telles zones de décollement. La symétrie des forces de pression étant alors rompue, de tels décollements de jets entraînent des charges latérales importantes qui peuvent déformer le divergent, éventuellement de manière plastique, c'est-à-dire de manière irréversible.

En outre, de telles charges latérales peuvent entraîner des mouvements latéraux du divergent et donc exercer des contraintes non souhaitées sur d'autres composant du moteur-fusée, notamment sa chambre de combustion, son articulation, ses vérins ou encore ses attaches, risquant ainsi de les endommager.

Or, à ce jour, outre l'option de renforcer, et donc d'alourdir, les différents composants subissant ces charges latérales, les seules solutions connues visent à équiper la table de lancement de dispositifs de maintien encombrants, complexes et couteux configurés pour tenir le divergent pendant le démarrage puis pour se rétracter au moment du décollage à proprement parler.

On connait également le document RU 2 225 527 qui décrit une installation de test pour moteur-fusée.

Il existe donc un réel besoin pour un moteur-fusée bénéficiant d'une meilleure tenue durant sa phase de démarrage et qui soit dépourvu, au moins en partie, des inconvénients inhérents aux méthodes connues précitées.

### PRESENTATION DE L'INVENTION

Le présent exposé concerne un moteur-fusée, comprenant un divergent et un système d'arrimage configuré pour maintenir le divergent lors du démarrage du moteur-fusée, le système d'arrimage comprenant une pluralité de câbles radiaux connectés par leur première extrémité à plusieurs points du divergent, et un câble périphérique, connecté à la deuxième extrémité des câbles radiaux, configuré pour coopérer avec des attaches d'une table de lancement.

Dans le présent exposé, les termes « axial », « radial », « tangentiel », « intérieur », « extérieur » et leurs dérivés sont définis par rapport à l'axe principal du moteur-fusée ; on entend par « plan axial » un plan passant par l'axe principal du moteur-fusée et par « plan radial » un plan perpendiculaire à cet axe principal ; enfin, les termes « amont » et « aval » sont définis par rapport à la circulation de fluides dans le moteur-fusée.

Grâce à un tel dispositif d'amarrage, il est possible de maintenir efficacement le divergent pendant le démarrage du moteur et donc de réduire ses déformations ainsi que ses éventuels déplacements latéraux. En effet, lorsqu'un décollement de jet se produit dans une zone du divergent, et donc lorsque qu'une charge latérale apparait tendant à déformer la paroi opposée du divergent et/ou à déplacer le moteur-fusée, cette paroi est retenue par les câbles radiaux eux-mêmes retenus par le câble périphérique coopérant avec les attaches de la table de lancement.

Dès lors, les déformations du divergent sont minimisées et le risque de déformation plastique irréversible est réduit voire complètement supprimé ; il en va de même pour la chambre de combustion. En outre, les déplacements latéraux étant réduits, les contraintes exercées sur les autres composants du moteur-fusée tels que son articulation, ses vérins ou ses attaches sont réduites. Les différents composants du moteur-fusée peuvent alors être allégés, réduisant ainsi la masse totale du moteur-fusée.

Au moment du décollage effectif, lorsque le moteur-fusée a atteint son régime permanent et donc lorsque le risque de décollement de jet n'existe en principe plus, il est possible de libérer le dispositif d'amarrage, ou encore de détacher ce dernier du divergent, de manière à permettre au moteur-fusée de s'élever et au lanceur de décoller. De préférence, la coopération entre le dispositif d'amarrage et la table de lancement est rompue : le dispositif d'amarrage s'élève alors avec le moteur-fusée puis est aspiré et détruit par le jet du moteur-fusée. Ainsi, le dispositif d'amarrage n'affecte pas les performances du moteur-fusée en vol et ne l'alourdit pas.

Dans certains modes de réalisation, les câbles radiaux sont connectés en partie basse du divergent, de préférence au niveau du tiers inférieur du divergent.

Dans certains modes de réalisation, les câbles radiaux sont connectés à l'extrémité inférieure du divergent.

Dans certains modes de réalisation, le divergent comprend un circuit de refroidissement équipé de tuyères de sortie à l'extrémité inférieure du divergent.

Dans certains modes de réalisation, les câbles radiaux sont connectés aux tuyères de sortie du circuit de refroidissement.

Dans certains modes de réalisation, les points de connexion des câbles radiaux au divergent sont situés dans un même plan horizontal. On assure ainsi que les forces de retenue de tous les câbles radiaux s'exercent dans un même plan, facilitant ainsi l'équilibrage des forces s'exerçant sur le divergent.

Dans certains modes de réalisation, les points de connexion des câbles radiaux au divergent sont situés de telle sorte que leur barycentre se situe sur l'axe principal du divergent.

Dans certains modes de réalisation, les points de connexion des câbles radiaux au divergent sont situés de manière à respecter une invariance par rotation autour de l'axe principal du divergent.

Dans certains modes de réalisation, les points de connexion des câbles radiaux au divergent sont situés de manière axisymétrique par rapport à l'axe principal du divergent.

Dans certains modes de réalisation, les points de connexion des câbles radiaux au divergent sont espacés de manière régulière autour de l'axe du divergent. Ces différentes mesures permettent de faciliter l'équilibrage des forces s'exerçant sur le divergent. Grâce à une telle configuration présentant un niveau élevé de symétrie et de régularité, on assure ainsi une bonne répartition et un bon équilibrage des forces sur les différents câbles radiaux, ce qui permet de maintenir correctement le divergent quelle que soit la zone dans laquelle apparait un décollement de jet.

Dans certains modes de réalisation, le système d'arrimage comprend au moins 3 câbles radiaux, de préférence au moins 6 câbles radiaux.

Dans certains modes de réalisation, tous les câbles radiaux possèdent sensiblement la même longueur.

Dans certains modes de réalisation, cette longueur est supérieure à 3 m.

Dans certains modes de réalisation, au moins un câble radial, de préférence tous les câbles radiaux, peut coulisser par rapport au câble périphérique. Ceci est tout d'abord une manière aisée de connecter les câbles radiaux au câble périphérique, le câble périphérique pouvant passer par exemple dans une boucle formée par ledit câble radial. En outre, ceci permet aux câbles radiaux de se déplacer le cas échéant le long du câble périphérique, notamment en cas de forte déformation du divergent, afin de s'orienter le mieux possible par rapport au divergent, en général perpendiculairement à sa paroi, afin d'exercer une force de retenue efficace.

Dans certains modes de réalisation, le câble périphérique comprend un tendeur. Ce tendeur, qui peut notamment être un ridoir ou un ressort, permet de maîtriser la tension du câble périphérique afin de régler la performance du dispositif d'amarrage.

Dans certains modes de réalisation, le tendeur comprend un amortisseur. Cet amortisseur permet d'autoriser des mouvements lents et/ou de faible amplitude du câble périphérique, lors de l'installation du dispositif d'amarrage notamment ou lors d'opérations de préparation du moteur avant allumage, tout en résistant à l'encontre des mouvements rapides et/ou de forte amplitude ayant lieu au moment du démarrage du moteur-fusée afin de maintenir efficacement le divergent au moment où cela est utile.

Dans certains modes de réalisation, le câble périphérique et/ou les câbles radiaux sont non métalliques. De cette manière, le risque d'endommagement du divergent ou d'autres composants du moteur-fusée est réduit dans le cas où le dispositif d'amarrage heurte ces derniers après sa libération.

Dans certains modes de réalisation, le câble périphérique est configuré pour rompre en moins de 5 secondes, de préférence moins de 0,5 seconde lorsqu'il est exposé à une température supérieure à 2500°C. Ceci permet de rompre le câble périphérique, et donc de libérer le dispositif d'amarrage, dans une configuration dans laquelle le câble périphérique passe dans une zone exposée au jet du moteur-fusée ou d'un éventuel propulseur d'appoint.

Dans certains modes de réalisation, le matériau du câble périphérique possède une température de fusion inférieure à 1000 °C.

Dans certains modes de réalisation, le câble périphérique et/ou les câbles radiaux sont réalisés en Kevlar.

Dans certains modes de réalisation, le câble périphérique comprend un segment frangible apte à être rompu sur commande. Ceci permet de libérer le dispositif d'amarrage sur commande au moment voulu. Ce segment frangible peut par exemple comprendre une charge pyrotechnique commandée.

Le présent exposé concerne également un ensemble comprenant un moteur-fusée selon l'un quelconque des modes de réalisation précédents et une table de lancement, le moteur-fusée étant positionné sur la table de lancement, dans lequel la table de lancement comprend des attaches autour desquelles passe le câble périphérique.

Dans le présent exposé, on entend par « table de lancement » toute surface sur laquelle peut être allumé un moteur-fusée, civil ou militaire, pour un lancement réel ou pour un allumage expérimental : il peut ainsi s'agir notamment d'un pas de tir, d'une rampe de lancement ou encore d'un banc d'essai.

Dans certains modes de réalisation, les attaches sont cylindriques. Ainsi, le câble périphérique est retenu par les attaches dans un plan horizontal mais n'est pas retenu dans la direction verticale : le câble périphérique peut dès lors passer par-dessus les attaches lorsque le divergent commence à s'élever, permettant ainsi la libération du dispositif d'amarrage. Ces attaches sont ainsi de préférence lisses, dépourvues de de crochet ou d'autres protubérances.

Dans certains modes de réalisation, le contour formé par les attaches entoure le moteur-fusée.

Dans certains modes de réalisation, les attaches sont disposées sur un cercle. Ceci permet une bonne répartition des efforts sur les différentes attaches.

Dans certains modes de réalisation, le barycentre des attaches se situe sur l'axe principal du divergent du moteur-fusée.

Dans certains modes de réalisation, les attaches sont situées de manière à respecter une invariance par rotation autour de l'axe principal du divergent.

Dans certains modes de réalisation, les attaches sont situées de manière axisymétrique par rapport à l'axe principal du divergent.

Dans certains modes de réalisation, les attaches sont espacées de manière régulière autour de l'axe du divergent.

Dans certains modes de réalisation, une attache est prévue entre chaque câble radial. Ces différentes options permettent une bonne répartition et un bon équilibrage des forces sur les différentes attaches, ce qui permet de maintenir correctement le divergent quelle que soit la zone dans laquelle apparaît un décollement de jet.

Dans certains modes de réalisation, le câble périphérique est fixé à la table de lancement à l'aide d'un dispositif de fixation détachable sur commande. Un tel dispositif de fixation permet de libérer le dispositif d'amarrage sur commande. Il peut notamment s'agit d'un crochet libérable sur commande.

Dans certains modes de réalisation, l'ensemble comprend en outre au moins un propulseur d'appoint configuré pour démarrer après le moteur-fusée ; la table de lancement comprend une zone exposée au jet du propulseur d'appoint ; et le câble périphérique passe à l'intérieur de ladite zone exposée au jet du propulseur d'appoint. De cette manière, le câble est automatiquement rompu par le jet du propulseur d'appoint peu de temps après le démarrage du moteur-fusée principal, libérant ainsi le dispositif d'amarrage.

Dans certains modes de réalisation, la zone exposée au jet du propulseur d'appoint comprend une fosse, et le câble périphérique descend dans ladite fosse.

Dans certains modes de réalisation, le câble périphérique traverse de part en part ladite zone exposée au jet du propulseur d'appoint. Cette configuration permet d'exposer une longueur importante du câble périphérique au jet du propulseur d'appoint afin de rompre plus vite et plus efficacement le câble périphérique. En outre, dans cette configuration, le câble périphérique peut rester dans un même plan horizontal, ce qui évite la mise en place d'un dispositif de renvoi d'angle vertical. Enfin, il ne nécessite pas de prévoir dans la zone exposée au jet du propulseur d'appoint une quelconque attache ou autre organe de coopération avec le câble, réduisant ainsi la maintenance de la table de lancement.

Les caractéristiques et avantages précités, ainsi que d'autres, apparaîtront à la lecture de la description détaillée qui suit, d'exemples de réalisation du moteur-fusée proposé. Cette description détaillée fait référence aux dessins annexés.

### BREVE DESCRIPTION DES DESSINS

Les dessins annexés sont schématiques et visent avant tout à illustrer les principes de l'invention.
La FIG 1 est une vue en plan d'un exemple de moteur-fusée sur une table de lancement.
La FIG 2 est une vue en coupe longitudinale du moteur-fusée et de la table de lancement de la FIG 1.
La FIG 3 est une vue en plan du moteur-fusée et de la table de lancement de la FIG 1 lors du démarrage du moteur-fusée.
La FIG 4 est une vue en plan du moteur-fusée et de la table de lancement de la FIG 1 lors du décollage du moteur-fusée.
La FIG 5 est une vue en plan d'un deuxième exemple de moteur-fusée et de table de lancement.

### DESCRIPTION DETAILLEE D'EXEMPLE(S) DE REALISATION

Afin de rendre plus concrète l'invention, un exemple de moteur-fusée est décrit en détail ci-après, en référence aux dessins annexés. Il est rappelé que l'invention ne se limite pas à cet exemple.

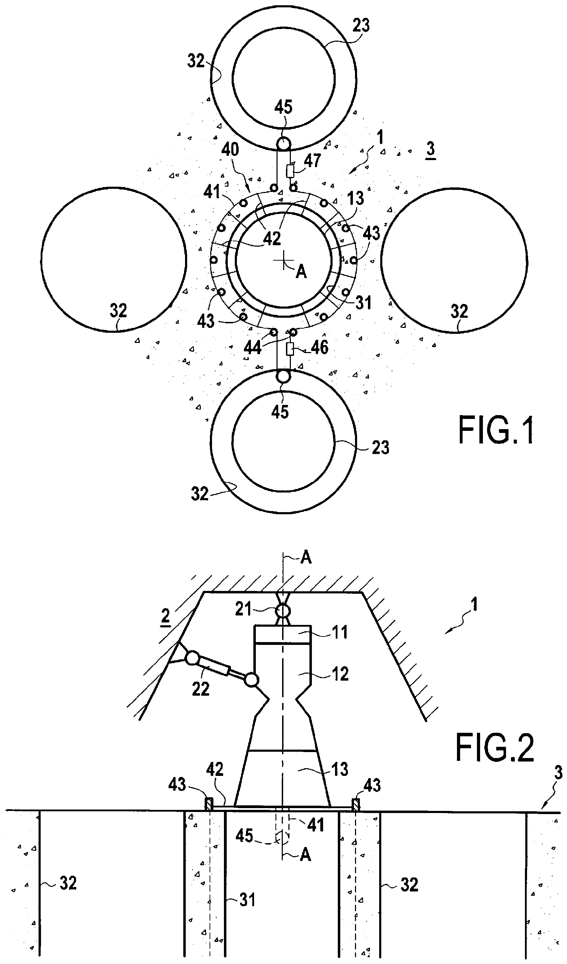

La FIG 2 représente, en coupe selon un plan vertical passant par son axe principal A, un moteur-fusée 1 selon l'invention. Il comporte, d'amont en aval, une tête d'injection 11, une chambre propulsive 12 et un divergent 13. Cet ensemble est monté sur un lanceur 2 par l'intermédiaire d'une articulation 21 du type Cardan, montée à son extrémité supérieure, et de vérins latéraux 22.

Lors du fonctionnement normal du moteur 1, en régime permanent, la tête d'injection 11 injecte un mélange de deux ergols liquides dans la partie amont de la chambre propulsive 12 ; la combustion des ergols se produit alors dans cette partie de la chambre propulsive 12, formant chambre de combustion, et génère une quantité importante de gaz brulés éjectés à grande vitesse vers l'aval ; le passage du col de la chambre propulsive 12 permet d'accélérer les gaz brûlés tandis que sa partie aval et le divergent 13 assurent la détente des gaz brûlés avant leur éjection à l'extrémité aval du divergent 13, assurant ainsi une poussée contraire dirigée vers le haut et permettant de propulser le lanceur.

Outre le moteur-fusée principal 1 à ergols liquide, le lanceur 2 peut comprendre des propulseurs d'appoints, par exemple à poudre, également appelés « boosters ». Ainsi, dans le présent exposé, le lanceur 2 comprend deux propulseurs d'appoint 23 disposés de part et d'autre du moteur-fusée principal 1.

Comme cela est représenté sur la FIG 1, lors de la préparation du lancement, le lanceur 2 est placé la table de lancement 3 d'un pas de tir, cette table de lancement 3 étant équipée de fosses 31, 32 situées en vis-à-vis du moteur-fusée 1 et des propulseurs d'appoint 23 de sorte à recevoir le jet de gaz brulés de chacun des moteurs.

Le moteur-fusée 1 comprend en outre un dispositif d'amarrage 40 comprenant un câble périphérique 41 et une pluralité de câbles radiaux 42 réalisés en Kevlar. La première extrémité de chaque câble radial 42 est attachée à l'extrémité inférieure du divergent 13 du moteur-fusée 1, par exemple sur les tuyères de sortie du système de refroidissement du divergent 13. L'autre extrémité de chaque câble radial 42 comporte une boucle dans laquelle passe le câble périphérique 41. Les câbles radiaux 42 s'étendent ainsi radialement par rapport à l'axe principal A du moteur-fusée 1.

Le câble périphérique 41, qui forme une boucle fermée, fait ainsi le tour du divergent 13 en passant dans les boucles de chaque câble radial 42 et en passant en outre derrière des plots 43 (c'est-à-dire sur leur côté extérieur par rapport à l'axe principal A), formant attaches, prévues sur la table de lancement 3 le long d'un cercle entourant le divergent 13. Le câble périphérique 41 passe également devant des plots de renvoi d'angle 44 (c'est-à-dire sur leur côté intérieur par rapport à l'axe principal A) afin de se diriger radialement vers une fosse 32 de la table de lancement au sein de laquelle il fait demi-tour derrière un taquet 45. Ainsi, dans le présent exemple, le câble périphérique 41 descend dans les deux fosses 32 situées en face des propulseurs d'appoint 23.

Dans le présent exemple, chacun des plots d'attache 43, des plots de renvoi d'angle 44 et des taquets 45 prend la forme d'une tige cylindrique lisse.

Le câble périphérique 41 comprend en outre un tendeur 46, associant un ressort et un amortisseur, permettant de régler la tension du câble périphérique 41 une fois installé autour des différents plots et taquets 43, 44 et 45.

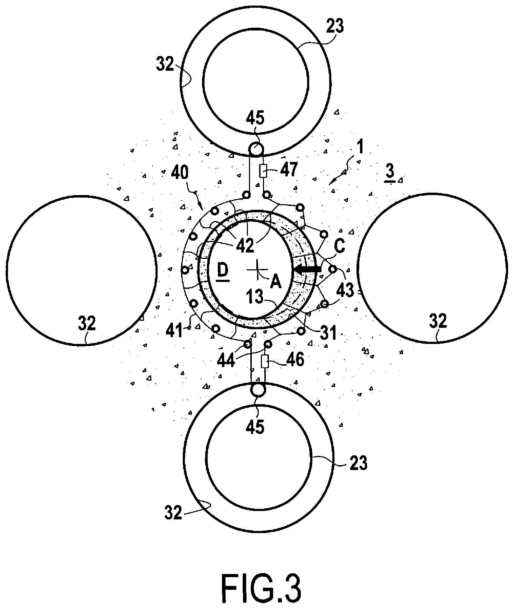

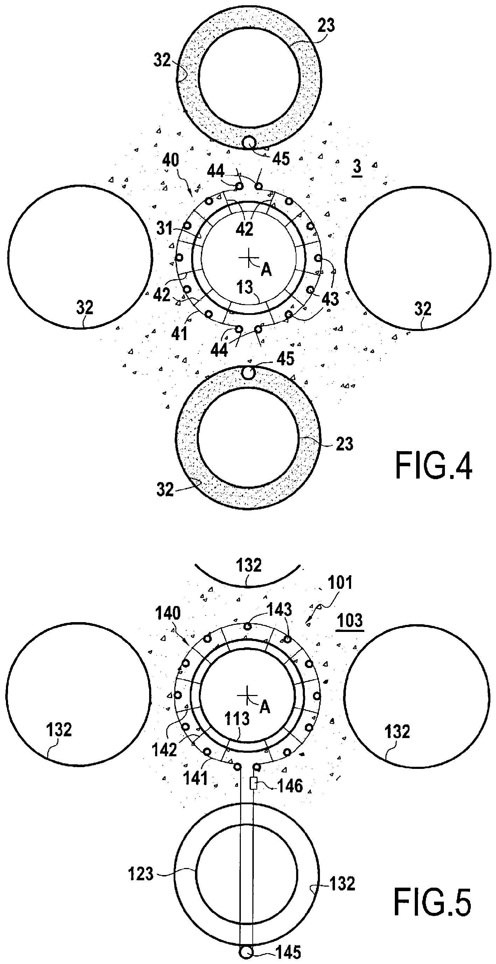

Le fonctionnement du dispositif d'amarrage va maintenant être décrit en référence aux FIG 3 et 4.

La FIG 3 illustre la situation pendant le démarrage du moteur-fusée 1. Durant cette phase de démarrage, le moteur-fusée 1 commence à réaliser la combustion des ergols et à éjecter un jet de gaz brulés en direction de la fosse 31. Toutefois, comme cela est représenté sur la FIG 3, un décollement de jet peut se produire dans une zone D du divergent 13, ce qui entraîne l'apparition d'une charge latéral C dirigée vers l'intérieur dans la paroi opposée à la zone D : le divergent 13 tend ainsi à se déformer comme cela est représenté de manière exagérée sur la FIG 3 (la forme initiale du divergent 13 est rappelée à l'aide d'un trait interrompu sur cette figure).

Dans un tel cas, la portion de paroi du divergent 13 opposée à la zone de décollement D tire sur les câbles radiaux 42 qui coulissent et tirent sur le câble périphérique 41 : dès lors, ce dernier étant retenu par les plots d'attache 43, le dispositif d'amarrage 40 s'oppose à la déformation ainsi qu'au déplacement du divergent 13, l'aidant ainsi à maintenir sa forme et sa position.

Après quelques secondes, une fois tous les paramètres fonctionnels du moteur principal stabilisés et conformes à l'attendu, les propulseurs d'appoint 23 sont allumés et commencent à éjecter leur jet de gaz brulés dans les fosses 32. Dès lors, la température élevée de ces jets entraîne la section du câble périphérique 41 et donc sa libération des taquets 45.

En conséquence, lorsque le lanceur 2 commence à s'élever, le câble périphérique 41 est détaché de la table de lancement 3 et peut ainsi suivre l'élévation du lanceur 2 en glissant le long des plots 43, 44 puis en passant au-dessus de ces derniers. Le câble périphérique 41 et les câbles radiaux 42 sont alors aspirés par effet Bernoulli à l'intérieur du jet de gaz où ils sont détruits par la chaleur des gaz.

Alternativement, ou en complément, le câble périphérique 41 peut comprendre un tronçon frangible, équipé par exemple d'une charge pyrotechnique commandée 47, qui est rompu sur commande lorsque le lanceur 2 commence à s'élever.

Alternativement, ou en complément, au moins un plot 43, 44 ou taquet 45 peut être équipé d'un dispositif de libération ou d'escamotage permettant de libérer le câble périphérique 41 sur commande lorsque le lanceur 2 commence à s'élever.

La FIG 5 illustre un deuxième exemple de moteur-fusée 101 comprenant également un dispositif d'amarrage 140 maintenant le divergent 113 au moment du démarrage.

Ce dispositif d'amarrage 140 est en grande partie analogue à celui de l'exemple précédent et ne sera donc pas décrit à nouveau en détail. Il convient toutefois de noter que, dans ce deuxième exemple, le câble périphérique 141 ne descend pas dans la fosse 132 située en vis-à-vis du propulseur d'appoint 123 mais traverse ladite fosse 132 diamétralement, d'un bord à l'autre : ainsi, le taquet 145 autour duquel le câble périphérique 141 fait demi-tour n'est plus situé dans la fosse 132 mais sur la table de lancement 103, au-delà de ladite fosse 132 depuis l'axe principal A.

En outre, contrairement au premier exemple, le câble périphérique 141 ne pénètre ici que dans une seule zone exposée au jet d'un propulseur d'appoint 123, ce qui est suffisant pour libérer le dispositif d'amarrage 140 au moment du décollage.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Moteur-fusée, comprenant un divergent (13) et un système d'arrimage (40) configuré pour maintenir le divergent (13) lors du démarrage du moteur-fusée (1), le système d'arrimage (40) comprenant
une pluralité de câbles radiaux (42) connectés par leur première extrémité à plusieurs points du divergent (13), **caractérisé en ce que** le système d'arrimage (40) comprend
un câble périphérique (41), connecté à la deuxième extrémité des câbles radiaux (42), configuré pour coopérer avec des attaches (43) d'une table de lancement (3).

2. Moteur-fusée selon la revendication 1, dans lequel les points de connexion des câbles radiaux (42) au divergent (13) sont situés de telle sorte que leur barycentre se situe sur l'axe principal (A) du divergent (13).

3. Moteur-fusée selon la revendication 1 ou 2, dans lequel les points de connexion des câbles radiaux (42) au divergent (13) sont espacés de manière régulière autour de l'axe (A) du divergent (13).

4. Moteur-fusée selon l'une quelconque des revendications 1 à 3, dans lequel au moins un câble radial (42), de préférence tous les câbles radiaux, peut coulisser par rapport au câble périphérique (41).

5. Moteur-fusée selon l'une quelconque des revendications 1 à 4, dans lequel le câble périphérique (41) comprend un tendeur (46).

6. Moteur-fusée selon la revendication 5, dans lequel le tendeur (46) comprend un amortisseur.

7. Moteur-fusée selon l'une quelconque des revendications 1 à 6, dans lequel le câble périphérique (41) est configuré pour rompre en moins de 5 secondes, de préférence moins de 0,5 seconde, lorsqu'il est exposé à une température supérieure à 2500°C.

8. Moteur-fusée selon l'une quelconque des revendications 1 à 7, dans lequel le câble périphérique (41) comprend un segment frangible (47) apte à être rompu sur commande.

9. Ensemble comprenant un moteur-fusée (1) selon l'une quelconque des revendications 1 à 8 et une table de lancement (3), le moteur-fusée (1) étant positionné sur la table de lancement (3),
dans lequel la table de lancement (3) comprend des attaches (43) autour desquelles passe le câble périphérique (41).

10. Ensemble selon la revendication 9, dans lequel les attaches (43) sont cylindriques.

11. Ensemble selon la revendication 9 ou 10, dans lequel les attaches (43) sont disposées sur un cercle entourant le moteur-fusée (1).

12. Ensemble selon l'une quelconque des revendications 9 à 11, dans lequel le câble périphérique (41) est fixé à la table de lancement (3) à l'aide d'un dispositif de fixation détachable sur commande.

13. Ensemble selon l'une quelconque des revendications 9 à 12, comprenant en outre au moins un propulseur d'appoint (23) configuré pour démarrer après le moteur-fusée (1),
dans lequel la table de lancement (3) comprend une zone (32) exposée au jet du propulseur d'appoint (23), et
dans lequel le câble périphérique (41) passe à l'intérieur de ladite zone (32) exposée au jet du propulseur d'appoint (23).

## Patentansprüche

1. Raketenmotor, umfassend ein divergentes Düsenteil (13) und ein Sicherungssystem (40), das dazu ausgelegt ist, das divergente Düsenteil (13) beim Starten des Raketenmotors (1) zu halten, wobei das Sicherungssystem (40) umfasst:
eine Vielzahl von radialen Kabeln (42), die durch ihr erstes Ende mit mehreren Punkten des divergenten Düsenteils (13) verbunden sind,
**dadurch gekennzeichnet, dass** das Sicherungssystem (40) umfasst:
ein peripheres Kabel (41), das mit dem zweiten Ende der radialen Kabel (42) verbunden ist und dafür ausgelegt ist, um mit den Befestigungen (43) einer Abschlussplattform (3) zusammenzuwirken.

2. Raketenmotor nach Anspruch 1, wobei die Verbindungspunkte der radialen Kabel (42) mit dem divergenten Düsenteil (13) derart angeordnet sind, dass ihr Schwerpunkt auf der Hauptachse (A) des divergenten Düsenteils (13) angeordnet ist.

3. Raketenmotor nach Anspruch 1 oder 2, wobei die Verbindungspunkte der radialen Kabel (42) mit dem divergenten Düsenteil (13) regelmäßig um die Achse (A) des divergenten Düsenteils (13) beabstandet sind.

4. Raketenmotor nach einem der Ansprüche 1 bis 3, wobei mindestens ein radiales Kabel (42), vorzugsweise alle radialen Kabel, in Bezug auf das periphere Kabel (41) gleiten kann.

5. Raketenmotor nach einem der Ansprüche 1 bis 4, wobei das periphere Kabel (41) eine Spannvorrichtung (46) umfasst.

6. Raketenmotor nach Anspruch 5, wobei die Spannvorrichtung (46) ein Dämpfungselement umfasst.

7. Raketenmotor nach einem der Ansprüche 1 bis 6, wobei das periphere Kabel (41) dafür ausgelegt ist, um in weniger als 5 Sekunden, vorzugsweise weniger als 0,5 Sekunden, zu brechen, wenn es einer Temperatur von mehr als 2500 °C ausgesetzt wird.

8. Raketenmotor nach einem der Ansprüche 1 bis 7, wobei das periphere Kabel (41) ein Sollbruchstellensegment (47) umfasst, das dafür geeignet ist, auf Befehl zu brechen.

9. Einheit, umfassend einen Raketenmotor (1) nach einem der Ansprüche 1 bis 8 und eine Abschussplattform (3), wobei der Raketenmotor (1) auf der Abschussplattform (3) positioniert ist,
wobei die Abschussplattform (3) Befestigungen (43) umfasst, um die das periphere Kabel (41) verläuft.

10. Einheit nach Anspruch 9, wobei die Befestigungen (43) zylindrisch sind.

11. Einheit nach Anspruch 9 oder 10, wobei die Befestigungen (43) auf einem Kreis angeordnet sind, der den Raketenmotor (1) umgibt.

12. Einheit nach einem der Ansprüche 9 bis 11, wobei das periphere Kabel (41) an der Abschussplattform (3) mit Hilfe einer Befestigungsvorrichtung befestigt ist, die auf Befehl lösbar ist.

13. Einheit nach einem der Ansprüche 9 bis 12, umfassend außerdem mindestens eine Zusatzrakete (23), die dafür ausgelegt ist, um nach dem Raketenmotor (1) zu starten,
wobei die Abschussplattform (3) eine Zone (32) umfasst, die dem Strahl der Zusatzrakete (23) ausgesetzt ist, und
wobei das periphere Kabel (41) im Inneren der Zone (32) verläuft, die dem Strahl der Zusatzrakete (23) ausgesetzt ist.

## Claims

1. A rocket engine including a diverging section (13) and a lashing system (40) configured to hold the diverging section (13) while starting the rocket engine (1), the lashing system (40) comprising
a plurality of radial cables (42) connected at respective first ends to a plurality of points of the diverging section (13),
**characterized in that** the lashing system (40) comprises a peripheral cable (41) connected to the second ends of the radial cables (42) and configured to cooperate with attachment points (43) of a launch platform (3) .

2. A rocket engine according to claim 1, wherein the points where the radial cables (42) are connected to the diverging section (13) are situated in such a manner that their center of gravity lies on the main axis (A) of the diverging section (13).

3. A rocket engine according to claim 1 or claim 2, wherein the points where the radial cables (42) are connected to the diverging section (13) are spaced apart in regular manner around the axis (A) of the diverging section (13).

4. A rocket engine according to any one of claims 1 to 3, wherein at least one radial cable (42), and preferably all of the radial cables, is/are slidable relative to the peripheral cable (41).

5. A rocket engine according to any one of claims 1 to 4, wherein the peripheral cable (41) includes a tensioner (46).

6. A rocket engine according to claim 5, wherein the tensioner (46) includes a damper.

7. A rocket engine according to any one of claims 1 to 6, wherein the peripheral cable (41) is configured to break in less than 5 seconds, preferably in less than 0.5 seconds, on being exposed to a temperature higher than 2500°C.

8. A rocket engine according to any one of claims 1 to 7, wherein the peripheral cable (41) includes a breakable segment (47) suitable for being broken on command.

9. An assembly comprising a rocket engine (1) according to any one of claims 1 to 8 and a launch platform (3), the rocket engine (1) being positioned on the launch platform (3),
wherein the launch platform (3) includes attachment points (43) around which the peripheral cable (41) passes.

10. An assembly according to claim 9, wherein the attachment points (43) are cylindrical.

11. An assembly according to claim 9 or claim 10, wherein the attachment points (43) are arranged in a circle around the rocket engine (1).

12. An assembly according to any one of claims 9 to 11, wherein the peripheral cable (41) is fastened to the launch platform (3) using a fastener device that is detachable on command.

13. An assembly according to any one of claims 9 to 12, further comprising at least one additional thruster (23) configured to start after the rocket engine (1),
wherein the launch platform (3) includes a zone (32) exposed to the jet from the additional thruster (23), and
wherein the peripheral cable (41) passes inside said zone (32) that is exposed to the jet from the additional thruster (23).
